# EUROPÄISCHE PATENTANMELDUNG

(11) **EP 3 305 389 A1**
(43) Veröffentlichungstag der Anmeldung: **11.04.2018**
(21) Anmeldenummer: 16002150.7
(22) Anmeldetag: 06.10.2016
(51) Int. Cl.: B01B 1/00, B01D 1/00, F17C 7/04, F17C 9/02

(54) **WASSERBADVERDAMPFER UND VERFAHRENSTECHNISCHE ANLAGE**

(71) Anmelder: Linde Aktiengesellschaft, 80331 München (DE)
(72) Erfinder: Lachenwitzer, Hubert, 83352 Altenmarkt (DE); Blum, Ingomar, 83342 Tacherting (DE); Wolferstetter, Clemens, 83308 Trostberg (DE)
(74) Vertreter: Meilinger, Claudia Sabine

(57) **Zusammenfassung**

Ein Wasserbadverdampfer (3) für eine verfahrenstechnische Anlage (1), mit einem Mantel (4), einem innerhalb des Mantels (4) angeordneten Kernrohr (19), das einen ersten Endabschnitt (20) und einen dem ersten Endabschnitt (20) abgewandten zweiten Endabschnitt (21) aufweist, und einem Rohrbündel (22), das in einem zwischen dem Mantel (4) und dem Kernrohr (19) vorgesehenen Spalt (26) angeordnet ist, wobei das Kernrohr (19) mit Hilfe des ersten Endabschnitts (20) fluiddicht mit einem Boden (11) des Mantels (4) verbunden ist, und wobei der zweite Endabschnitt (21) des Kernrohrs (19) fluiddurchlässig ist.

## Beschreibung

Die Erfindung betrifft einen Wasserbadverdampfer für eine verfahrenstechnische Anlage und eine verfahrenstechnische Anlage mit einem derartigen Wasserbadverdampfer.

Mit Hilfe von sogenannten Wasserbadverdampfern können verflüssigte Gase, wie Sauerstoff, Stickstoff, Argon, Ethylen, Propylen oder Erdgas verdampft werden. Wasserbadverdampfer werden insbesondere in petrochemischen und kryotechnischen Anlagen eingesetzt. Als Heizenergie wird hierbei die Abwärme von Wasser, Dampf oder elektrische Energie verwendet. Ein derartiger Wasserbadverdampfer weist ein Kernrohr auf, auf das ein Rohrbündel aufgewickelt ist. Das Kernrohr mit dem Rohrbündel ist innerhalb eines Mantels des Wasserbadverdampfers angeordnet.

Vor diesem Hintergrund besteht die Aufgabe der vorliegenden Erfindung darin, einen verbesserten Wasserbadverdampfer zur Verfügung zu stellen.

Demgemäß wird ein Wasserbadverdampfer für eine verfahrenstechnische Anlage vorgeschlagen. Der Wasserbadverdampfer umfasst einen Mantel, ein innerhalb des Mantels angeordnetes Kernrohr, das einen ersten Endabschnitt und einen dem ersten Endabschnitt abgewandten zweiten Endabschnitt aufweist, und ein Rohrbündel, das in einem zwischen dem Mantel und dem Kernrohr vorgesehenen Spalt angeordnet ist, wobei das Kernrohr mit Hilfe des ersten Endabschnitts fluiddicht mit einem Boden des Mantels verbunden ist, und wobei der zweite Endabschnitt des Kernrohrs fluiddurchlässig ist.

Dadurch, dass das Kernrohr fluiddicht mit dem Boden des Mantels verbunden ist, kann das Kernrohr als Steigleitung fungieren, in der das Wasser zum Verdampfen des verflüssigten Gases nach oben steigt. Hierdurch kann auf eine zusätzliche Steigleitung mit entsprechender externer Verrohrung verzichtet werden. Hierdurch werden die Montage sowie die Demontage des Wasserbadverdampfers vereinfacht.

Darunter, dass der erste Endabschnitt des Kernrohrs fluiddicht mit dem Boden des Mantels verbunden ist, ist zu verstehen, dass zwischen dem ersten Endabschnitt und dem Boden des Mantels eine Verbindung vorgesehen ist, die undurchlässig für Gase und/oder Flüssigkeiten ist. Vorzugweise ist der erste Endabschnitt des Kernrohrs stoffschlüssig mit dem Boden des Mantels verbunden. Insbesondere kann der erste Endabschnitt mit dem Boden des Mantels verschweißt sein. Darunter, dass der zweite Endabschnitt des Kernrohrs fluiddurchlässig ist, ist zu verstehen, dass an dem zweiten Endabschnitt kein Deckel oder Verschluss vorgesehen ist, so dass ein in dem Kernrohr vorgesehenes Fluid, insbesondere Wasser, durch den zweiten Endabschnitt aus dem Kernrohr austreten kann.

Gemäß einer Ausführungsform ist der erste Endabschnitt bezüglich einer Schwerkraftrichtung unterhalb des zweiten Endabschnitts angeordnet.

Insbesondere ist der Mantel so angeordnet, dass eine Symmetrie- oder Mittelachse des Mantels parallel zu der Schwerkraftrichtung orientiert ist. Alternativ kann der Mantel auch so angeordnet sein, dass die Mittelachse horizontal positioniert ist.

Gemäß einer weiteren Ausführungsform fungiert das Kernrohr als Steigleitung, so dass im Betrieb des Wasserbadverdampfers Wasser in dem Kernrohr entgegen der Schwerkraftrichtung nach oben aufsteigt, über den zweiten Endabschnitt aus dem Kernrohr austritt und in der Schwerkraftrichtung nach unten in dem Spalt über das Rohrbündel strömt.

Vorzugsweise strömt im Betrieb des Wasserbadverdampfers das zu verdampfende Gas entgegen der Schwerkraftrichtung von unten nach oben durch das Rohrbündel, wobei das Wasser zum Erwärmen des verflüssigten Gases im Gegenstrom in der Schwerkraftrichtung von oben nach unten strömt. Insbesondere ist in dem Spalt eine Spiralwicklung des Rohrbündels angeordnet, die im Betrieb des Wasserbadverdampfers von Wasser umströmt wird.

Gemäß einer weiteren Ausführungsform umfasst der Wasserbadverdampfer ferner einen ersten Wasserstutzen, der in den Spalt mündet, und einen zweiten Wasserstutzen, der in das Kernrohr mündet.

Der erste Wasserstutzen kann ein Zulauf und der zweite Wasserstutzen kann ein Ablauf sein. Umgekehrt kann der erste Wasserstutzen ein Ablauf und der zweite Wasserstutzen ein Zulauf sein. Im Betrieb des Wasserbadverdampfers kann die Strömungsrichtung des Wassers umgedreht werden. Das Wasser kann beispielsweise mit Hilfe von Dampflanzen erwärmt werden.

Gemäß einer weiteren Ausführungsform ist der erste Wasserstutzen senkrecht zu dem zweiten Wasserstutzen angeordnet.

Unter senkrecht ist vorliegend ein Winkel von bevorzugt von 90° ± 10°, weiter bevorzugt von 90° ± 5°, weiter bevorzugt von 90° ± 1°, weiter bevorzugt von genau 90° zu verstehen.

Gemäß einer weiteren Ausführungsform weist der Mantel ein Mantelunterteil und ein von dem Mantelunterteil trennbares Manteloberteil auf, wobei der erste Wasserstutzen und der zweite Wasserstutzen an dem Mantelunterteil vorgesehen sind.

Dadurch, dass der erste Wasserstutzen und der zweite Wasserstutzen an dem Mantelunterteil vorgesehen sind, kann das Manteloberteil von dem Mantelunterteil getrennt werden, ohne dass eine für das Wasser vorgesehene Verrohrung rückzubauen ist. Dies vereinfacht die Montage und die Demontage des Wasserbadverdampfers. Das Mantelunterteil weist vorzugsweise eine zylinderförmige Seitenwandung auf, die stirnseitig mit dem Boden verschlossen ist. Insbesondere ist die Seitenwandung mit dem Boden verschweißt. Das Manteloberteil weist ebenfalls eine zylinderförmige Seitenwandung auf, die oberseitig mit Hilfe eines Deckels verschlossen ist. Der Deckel ist vorzugsweise mit der Seitenwandung des Manteloberteils verschweißt.

Gemäß einer weiteren Ausführungsform weist das Mantelunterteil einen unteren Verbindungsflansch und das Manteloberteil einen oberen Verbindungsflansch auf, wobei der untere Verbindungsflansch und der obere Verbindungsflansch mit Hilfe von Verbindungsmitteln miteinander verbunden sind.

Vorzugsweise sind die Verbindungsmittel Schrauben. Es kann eine beliebige Anzahl an derartigen Verbindungsmitteln vorgesehen sein. Zwischen dem unteren Verbindungsflansch und dem oberen Verbindungsflansch kann eine Dichteinrichtung vorgesehen sein, die das Mantelunterteil gegenüber dem Manteloberteil abdichtet. Der untere Verbindungsflansch und der obere Verbindungsflansch sind vorzugsweise ringförmig ausgebildet und mit der Seitenwandung des Mantelunterteils beziehungsweise mit der Seitenwandung des Manteloberteils fest verbunden, insbesondere verschweißt.

Gemäß einer weiteren Ausführungsform umfasst der Wasserbadverdampfer ferner mit dem Rohrbündel in Fluidverbindung stehende Produktstutzen, die an dem Mantelunterteil vorgesehen sind.

Die Anzahl der Produktstutzen ist beliebig. Vorzugsweise sind zumindest zwei Produktstutzen vorgesehen, wobei mit Hilfe des einen Produktstutzens das zu verdampfende Gas dem Wasserbadverdampfer zugeführt wird und mit Hilfe des anderen Produktstutzens das verdampfte Gas dem Wasserbadverdampfer entnommen wird. Das Rohrbündel kann eine Vielzahl spiralgewickelter Lagen an Rohrleitungen aufweisen. Jeder Rohrleitung des Rohrbündels kann ein derartiger Produktstutzen oder es können jeder Rohrleitung zwei derartige Produktstutzen zugeordnet sein. Dadurch, dass auch die Produktstutzen an dem Mantelunterteil vorgesehen sind, kann das Manteloberteil von dem Mantelunterteil getrennt werden, ohne dass das Rohrbündel rückzubauen ist. Auch dies vereinfacht die Montage und die Demontage des Wasserbadverdampfers.

Gemäß einer weiteren Ausführungsform sind der zweite Wasserstutzen und die Produktstutzen an dem Boden des Mantels vorgesehen.

Vorzugsweise sind der zweite Wasserstutzen und die Produktstutzen in den Boden eingeschweißt.

Gemäß einer weiteren Ausführungsform ist der erste Wasserstutzen an einer Seitenwandung des Mantelunterteils vorgesehen.

Insbesondere mündet der erste Wasserstutzen in den zwischen dem Kernrohr und dem Mantel vorgesehenen Spalt hinein. Der zweite Wasserstutzen mündet in das Kernrohr hinein.

Gemäß einer weiteren Ausführungsform umfasst der Wasserbadverdampfer ferner ein Druckaufbaurohrbündel, das in dem Spalt angeordnet ist.

Das Druckaufbaurohrbündel ist vorzugsweise spiralgewickelt. Insbesondere ist das Druckaufbaurohrbündel auf das Kernrohr aufgewickelt. Mit Hilfe des Druckaufbaurohrbündels kann einem Gastank entnommenes verflüssigtes Gas dem Wasserbadverdampfer zugeführt, dort verdampft und wieder dem Gastank zum Druckaufbau in demselben zugeführt werden.

Gemäß einer weiteren Ausführungsform umfasst der Wasserbadverdampfer ferner mit dem Druckaufbaurohrbündel in Fluidverbindung stehende Produktstutzen, die an dem Mantelunterteil vorgesehen sind.

Vorzugsweise sind die Produktstutzen in den Boden des Mantels eingeschweißt. Insbesondere sind zumindest zwei derartige Produktstutzen für das Druckaufbaurohrbündel vorgesehen. Die Anzahl der Produktstutzen ist jedoch beliebig.

Gemäß einer weiteren Ausführungsform ist das Rohrbündel auf das Kernrohr aufgewickelt.

Insbesondere ist auch das Druckaufbaurohrbündel auf das Kernrohr aufgewickelt. Das Rohrbündel ist insbesondere mehrlagig, wobei unterschiedliche Lagen an Rohrleitungen gegensinnig auf das Kernrohr aufgewickelt sein können. Insbesondere ist das Rohrbündel auf das Kernrohr spiralförmig aufgewickelt.

Weiterhin wird eine verfahrenstechnische Anlage mit einem derartigen Wasserbadverdampfer vorgeschlagen.

Die verfahrenstechnische Anlage ist insbesondere zur Verdampfung von verflüssigten Gasen eingerichtet. Die verfahrenstechnische Anlage kann mehrere derartige Wasserbadverdampfer umfassen.

Gemäß einer Ausführungsform umfasst die verfahrenstechnische Anlage ferner einen Gastank für verflüssigte Gase, der in Fluidverbindung mit dem Rohrbündel ist. Insbesondere kann der Gastank mit Hilfe der Produktstutzen mit dem Rohrbündel in Fluidverbindung sein.

Weitere mögliche Implementierungen des Wasserbadverdampfers und/oder der verfahrenstechnischen Anlage umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Wasserbadverdampfers und/oder der verfahrenstechnischen Anlage hinzufügen.

Weitere vorteilhafte Ausgestaltungen und Aspekte des Wasserbadverdampfers und/oder der verfahrenstechnischen Anlage sind Gegenstand der Unteransprüche sowie der im Folgenden beschriebenen Ausführungsbeispiele des Wasserbadverdampfers und/oder der verfahrenstechnischen Anlage. Im Weiteren werden der Wasserbadverdampfer und/oder die verfahrenstechnische Anlage anhand von bevorzugten Ausführungsformen unter Bezugnahme auf die beigelegten Figuren näher erläutert.
Fig. 1 zeigt eine schematische Ansicht einer Ausführungsform einer verfahrenstechnischen Anlage; und
Fig. 2 zeigt eine schematische Ansicht einer Ausführungsform eines Wasserbadverdampfers für die verfahrenstechnische Anlage gemäß Fig. 1.

In den Figuren sind gleiche oder funktionsgleiche Elemente mit denselben Bezugszeichen versehen worden, sofern nichts anderes angegeben ist.

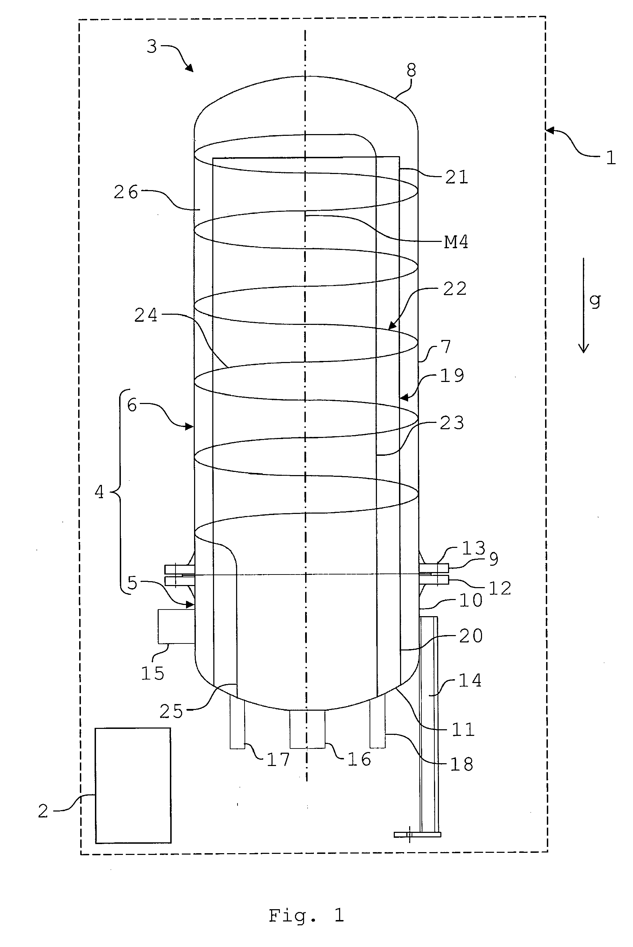

Die Fig. 1 zeigt eine schematische Ansicht einer Ausführungsform einer verfahrenstechnischen Anlage 1. Die verfahrenstechnische Anlage 1 kann eine petrochemische oder kryotechnische Anlage sein. Insbesondere kann die verfahrenstechnische Anlage 1 dazu eingesetzt werden, verflüssigte Gase, wie Sauerstoff, Stickstoff, Argon, Ethylen, Propylen oder Erdgas zu verdampfen. Die verfahrenstechnische Anlage 1 umfasst einen Gastank 2 zur Aufnahme eines derartigen verflüssigten Gases.

Die verfahrenstechnische Anlage 1 umfasst weiterhin einen Wasserbadverdampfer 3, mit dessen Hilfe das aus dem Gastank 2 entnommene verflüssigte Gas verdampft wird. Ein Wasserbadverdampfer 3 ist insbesondere ein spiralgewickelter Wärmeaustauscher. Der Wasserbadverdampfer 3 umfasst einen rohrförmigen Mantel 4, der ein Mantelunterteil 5 und ein von dem Mantelunterteil 5 trennbares Manteloberteil 6 umfasst.

Das Manteloberteil 6 umfasst eine zylinderförmige und vorzugsweise rotationssymmetrisch zu einer Symmetrie- oder Mittelachse M4 ausgebildete Seitenwandung 7, die oberseitig von einem Deckel 8 fluiddicht verschlossen ist. Der Deckel 8 kann mit der Seitenwandung 7 beispielsweise verschweißt sein. Das Manteloberteil 6 kann beispielsweise aus Edelstahl oder aus einer Aluminiumlegierung gefertigt sein. Das Manteloberteil 6 umfasst weiterhin einen ringförmig um die Seitenwandung 7 umlaufenden oberen Verbindungsflansch 9. Der obere Verbindungsflansch 9 kann beispielsweise mit der Seitenwandung 7 verschweißt sein. Der Deckel 8 und der obere Verbindungsflansch 9 sind an einander gegenüberliegenden Endabschnitten der zylinderförmigen Seitenwandung 7 vorgesehen.

Das Mantelunterteil 5 umfasst eine zylinderförmige und rotationssymmetrisch zu der Mittelachse M4 aufgebaute Seitenwandung 10. Das Mantelunterteil 5 ist unterseitig von einem Boden 11 verschlossen, der mit der Seitenwandung 10 verschweißt sein kann. Das Mantelunterteil 5 ist beispielsweise ebenfalls aus Edelstahl oder aus einer Aluminiumlegierung gefertigt. Das Mantelunterteil 5 umfasst weiterhin einen unteren Verbindungsflansch 12, der fest mit der Seitenwandung 10 verbunden, insbesondere verschweißt, sein kann. Der untere Verbindungsflansch 12 läuft ringförmig um die Seitenwandung 10 um.

Der untere Verbindungsflansch 12 und der obere Verbindungsflansch 9 sind mit Hilfe von Verbindungsmitteln 13, insbesondere Schrauben, miteinander verbunden. Zwischen den Verbindungsflanschen 9, 12 kann eine Dichteinrichtung vorgesehen sein, um das Mantelunterteil 5 und das Manteloberteil 6 gegeneinander abzudichten. Nach einem Lösen der Verbindungsmittel 13 kann das Manteloberteil 6 von dem Mantelunterteil 5 getrennt werden.

An dem Mantelunterteil 5 können weiterhin Stützfüße 14 vorgesehen sein, mit deren Hilfe der Wasserbadverdampfer 3 auf einem in der Fig. 1 nicht gezeigten Fundament platzierbar ist. In der Orientierung der Fig. 1 ist die Mittelachse M4 vertikal, das heißt parallel zu einer Schwerkraftrichtung g angeordnet. Alternativ kann der Wasserbadverdampfer 3 auch so angeordnet sein, dass die Mittelachse M4 horizontal, das heißt, senkrecht zu der Schwerkraftrichtung g, positioniert ist.

Das Mantelunterteil 5 umfasst weiterhin einen ersten Wasserstutzen 15 sowie einen zweiten Wasserstutzen 16. Über die Wasserstutzen 15, 16 kann dem Wasserbadverdampfer 3 Wasser zugeführt beziehungsweise abgeführt werden. Dabei kann entweder der erste Wasserstutzen 15 als Zulauf und der zweite Wasserstutzen 16 als Ablauf oder der erste Wasserstutzen 15 als Ablauf und der zweite Wasserstutzen 16 als Zulauf dienen. Der erste Wasserstutzen 15 ist dabei senkrecht zu dem zweiten Wasserstutzen 16 positioniert.

Der erste Wasserstutzen 15 ist insbesondere an der Seitenwandung 10 vorgesehen. Beispielsweise kann der erste Wasserstutzen 15 mit der Seitenwandung 10 verschweißt sein und in der Seitenwandung 10 einen Durchbruch bilden. Der zweite Wasserstutzen 16 ist vorzugsweise an dem Boden 11 vorgesehen und bildet in dem Boden 11 einen Durchbruch. Insbesondere kann der zweite Wasserstutzen 16 mit dem Boden 11 verschweißt sein. Beispielsweise kann, wie in der Fig. 1 gezeigt, der zweite Wasserstutzen 16 mittig an dem Boden 11 positioniert und rotationsymmetrisch zu der Mittelachse M4 ausgebildet sein.

An dem Mantelunterteil 5 können weiterhin mehrere Produktstutzen 17, 18 vorgesehen sein. Die Anzahl der Produktstutzen 17, 18 ist dabei beliebig. Beispielsweise kann durch einen der Produktstutzen 17, 18 dem Wasserbadverdampfer 3 das verflüssigte Gas zugeführt werden und über den anderen Produktstutzen 17, 18 das verdampfte Gas aus dem Wasserbadverdampfer 3 abgeführt werden. Die Produktstutzen 17, 18, beziehungsweise zumindest einer der Produktstutzen 17, 18, ist in Fluidverbindung mit dem Gastank 2. Die Produktstutzen 17, 18 sind ebenfalls an dem Boden 11 des Mantelunterteils 5 vorgesehen.

Der Wasserbadverdampfer 3 umfasst weiterhin ein innerhalb des Mantels 4 angeordnetes Kernrohr 19. Das Kernrohr 19 ist zylinderförmig und rotationssymmetrisch zu der Mittelachse M4 ausgebildet. Das Kernrohr 19 kann beispielsweise aus Edelstahl oder aus einer Aluminiumlegierung gefertigt sein. Das Kernrohr 19 umfasst einen ersten Endabschnitt 20 sowie einen dem ersten Endabschnitt 20 abgewandten zweiten Endabschnitt 21. Das Kernrohr 19 ist beidseitig offen. Das heißt, an den Endabschnitten 20, 21 ist jeweils kein Deckel vorgesehen.

Das Kernrohr 19 ist jedoch mit Hilfe des ersten Endabschnitts 20 fluiddicht mit dem Boden 11 des Mantels 4 verbunden. Beispielsweise ist der erste Endabschnitt 20 fluiddicht mit dem Boden 11 verschweißt. Unter "fluiddicht" ist vorliegend zu verstehen, dass zwischen dem ersten Endabschnitt 20 und dem Boden 11 eine Verbindung, insbesondere eine stoffschlüssige Verbindung, vorgesehen ist, die undurchlässig für Gase oder Flüssigkeiten ist. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel oder der Verbindungspartner trennen lassen. Beispielsweise ist der erste Endabschnitt 20 mit dem Boden 11 verschweißt.

Da an dem zweiten Endabschnitt 21 des Kernrohrs 19 kein Verschluss oder Deckel vorgesehen ist, ist der zweite Endabschnitt 21 fluiddurchlässig. Das heißt, durch den zweiten Endabschnitt 21 kann ein Fluid, beispielsweise Wasser oder ein Gas, aus dem Kernrohr 19 austreten. Der erste Endabschnitt 20 ist bezüglich der Schwerkraftrichtung g unterhalb des zweiten Endabschnitts 21 angeordnet. Das Kernrohr 19 ist nur mit dem Mantelunterteil 5 und insbesondere nur mit dem Boden 11 des Mantelunterteils 5 verbunden, so dass das Manteloberteil 6 von dem Kernrohr 19 abgezogen werden kann, ohne dass zwischen dem Manteloberteil 6 und dem Kernrohr 19 eine Verbindung zu lösen ist.

Der Wasserbadverdampfer 3 umfasst weiterhin ein Rohrbündel 22, das auf das Kernrohr 19 aufgewickelt ist. Das Rohrbündel 22 kann mehrlagig sein. Das heißt, es können mehrere Lagen an Rohrleitungen übereinander auf das Kernrohr 19 aufgewickelt sein. Eine Wicklungsrichtung der Lagen kann sich dabei voneinander unterscheiden. Insbesondere sind die Rohrleitungen spiralförmig auf das Kernrohr 19 aufgewickelt.

Die Produktstutzen 17, 18 stehen mit dem Rohrbündel 22 in Fluidverbindung. Beispielsweise kann der Produktstutzen 18 mit einer Rohrleitung 23 des Rohrbündels 22 in Fluidverbindung sein. Die Rohrleitung 23 kann dabei innerhalb des Kernrohrs 19 angeordnet sein. Von dem zweiten Endabschnitt 21 aus windet sich das Rohrbündel 22 mit einer Spiralwicklung 24 spiralförmig um das Kernrohr 19 in der Schwerkraftrichtung g nach unten, wobei das Rohrbündel 22 mit Hilfe einer Rohrleitung 25 mit dem Produktstutzen 17 in Fluidverbindung ist. Zwischen dem Mantel 4 und dem Kernrohr 19 ist ein Spalt 26 vorgesehen, in dem das Rohrbündel 22, insbesondere die Spiralwicklung 24, zumindest abschnittsweise angeordnet ist. Der erste Wasserstutzen 15 mündet in den Spalt 26 hinein. Der zweite Wasserstutzen 16 mündet in das Kernrohr 19 hinein.

Im Betrieb des Wasserbadverdampfers 3 fungiert das Kernrohr 19 als Steigleitung, so dass durch den zweiten Wasserstutzen 16 zugeführtes Wasser in dem Kernrohr 19 entgegen der Schwerkraftrichtung g nach oben aufsteigt, über den zweiten Endabschnitt 21 des Kernrohrs 19 aus diesem austritt und in der Schwerkraftrichtung g nach unten in dem Spalt 26 über das Rohrbündel 22 und insbesondere über die Spiralwicklung 24 strömt.

Im Betrieb des Wasserbadverdampfers 3 kann dem Wasserbadverdampfer 3 das verflüssigte Gas über den Produktstutzen 17 zugeführt werden. Das verflüssigte Gas wird über die Spiralwicklung 24 entgegen der Schwerkraftrichtung g nach oben befördert. Dabei strömt das Wasser über das Rohrbündel 22, insbesondere über die Spiralwicklung 24, so dass das verflüssigte Gas von unten nach oben verdampft wird. Das verdampfte Gas wird über die Rohrleitung 23 und den Produktstutzen 18 abgeführt. Alternativ kann das zu verdampfende Gas auch in umgekehrter Richtung durch den Wasserbadverdampfer 3 hindurchgeführt werden. Aufgeheizt wird das Wasser vorzugsweise durch eine externe Wärmequelle. Als Heizenergie kann auch direkt elektrische Energie oder Dampf verwendet werden.

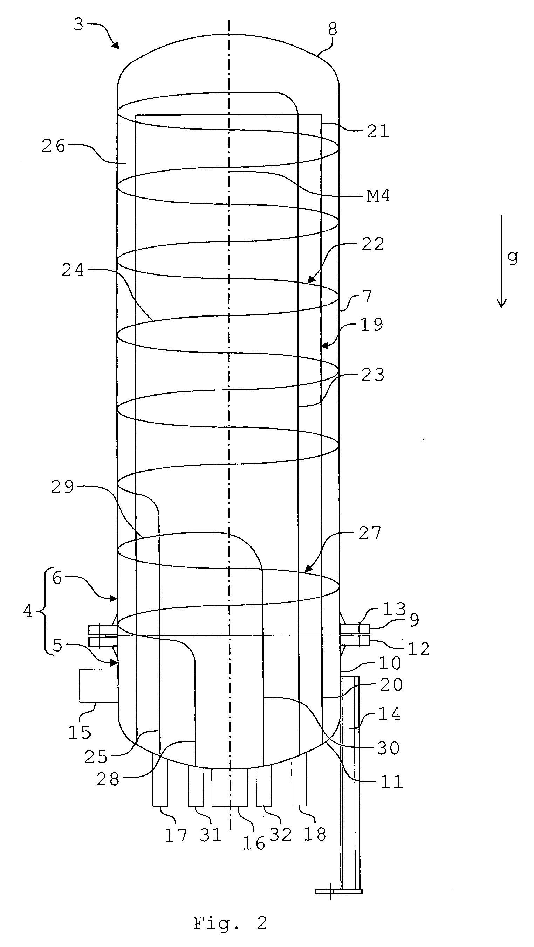

Die Fig. 2 zeigt eine weitere Ausführungsform eines Wasserbadverdampfers 3. Die Ausführungsform des Wasserbadverdampfers 3 gemäß der Fig. 2 unterscheidet sich von der Ausführungsform des Wasserbadverdampfers 3 gemäß der Fig. 1 dadurch, dass ein zusätzliches Druckaufbaurohrbündel 27 vorgesehen ist, das zumindest abschnittsweise in dem Spalt 26 angeordnet ist. Das Druckaufbaurohrbündel 27 umfasst eine Rohrleitung 28, eine Spiralwicklung 29 und eine Rohrleitung 30.

Weiterhin umfasst das Mantelunterteil 5 weitere Produktstutzen 31, 32, die an dem Boden 11 vorgesehen sind und die in Fluidverbindung mit dem Druckaufbaurohrbündel 27 stehen. Beispielsweise kann über den Produktstutzen 31 aus dem Gastank 2 verflüssigtes Gas abgezogen und dem Druckaufbaurohrbündel 27 zugeführt werden. Mit Hilfe des Druckaufbaurohrbündels 27 wird das verflüssigte Gas verdampft und über den Produktstutzen 32 wieder dem Gastank 2 zugeführt, um den Druck in dem Gastank 2 zu erhöhen.

Obwohl die vorliegende Erfindung anhand von Ausführungsbeispielen beschrieben wurde, ist sie vielfältig modifizierbar.

### Verwendete Bezugszeichen

- 1: Verfahrenstechnische Anlage
- 2: Gastank
- 3: Wasserbadverdampfer
- 4: Mantel
- 5: Mantelunterteil
- 6: Manteloberteil
- 7: Seitenwandung
- 8: Deckel
- 9: Verbindungsflansch
- 10: Seitenwandung
- 11: Boden
- 12: Verbindungsflansch
- 13: Verbindungsmittel
- 14: Stützfuß
- 15: Wasserstutzen
- 16: Wasserstutzen
- 17: Produktstutzen
- 18: Produktstutzen
- 19: Kernrohr
- 20: Endabschnitt
- 21: Endabschnitt
- 22: Rohrbündel
- 23: Rohrleitung
- 24: Spiralwicklung
- 25: Rohrleitung
- 26: Spalt
- 27: Druckaufbaurohrbündel
- 28: Rohrleitung
- 29: Spiralwicklung
- 30: Rohrleitung
- 31: Produktstutzen
- 32: Produktstutzen
- g: Schwerkraftrichtung
- M4: Mittelachse

## Patentansprüche

1. Wasserbadverdampfer (3) für eine verfahrenstechnische Anlage (1), mit einem Mantel (4), einem innerhalb des Mantels (4) angeordneten Kernrohr (19), das einen ersten Endabschnitt (20) und einen dem ersten Endabschnitt (20) abgewandten zweiten Endabschnitt (21) aufweist, und einem Rohrbündel (22), das in einem zwischen dem Mantel (4) und dem Kernrohr (19) vorgesehenen Spalt (26) angeordnet ist, wobei das Kernrohr (19) mit Hilfe des ersten Endabschnitts (20) fluiddicht mit einem Boden (11) des Mantels (4) verbunden ist, und wobei der zweite Endabschnitt (21) des Kernrohrs (19) fluiddurchlässig ist.

2. Wasserbadverdampfer nach Anspruch 1, wobei der erste Endabschnitt (20) bezüglich einer Schwerkraftrichtung (g) unterhalb des zweiten Endabschnitts (21) angeordnet ist.

3. Wasserbadverdampfer nach Anspruch 2, wobei das Kernrohr (19) als Steigleitung fungiert, so dass im Betrieb des Wasserbadverdampfers (3) Wasser in dem Kernrohr (19) entgegen der Schwerkraftrichtung (g) nach oben aufsteigt, über den zweiten Endabschnitt (21) aus dem Kernrohr (19) austritt und in der Schwerkraftrichtung (g) nach unten in dem Spalt (26) über das Rohrbündel (22) strömt.

4. Wasserbadverdampfer nach einem der Ansprüche 1 - 3, ferner umfassend einen ersten Wasserstutzen (15), der in den Spalt (26) mündet, und einen zweiten Wasserstutzen (16), der in das Kernrohr (19) mündet.

5. Wasserbadverdampfer nach Anspruch 4, wobei der erste Wasserstutzen (15) senkrecht zu dem zweiten Wasserstutzen (16) angeordnet ist.

6. Wasserbadverdampfer nach Anspruch 4 oder 5, wobei der Mantel (4) ein Mantelunterteil (5) und ein von dem Mantelunterteil (5) trennbares Manteloberteil (6) aufweist, und wobei der erste Wasserstutzen (15) und der zweite Wasserstutzen (16) an dem Mantelunterteil (5) vorgesehen sind.

7. Wasserbadverdampfer nach Anspruch 6, wobei das Mantelunterteil (5) einen unteren Verbindungsflansch (12) und das Manteloberteil (6) einen oberen Verbindungsflansch (9) aufweist, und wobei der untere Verbindungsflansch (12) und der obere Verbindungsflansch (9) mit Hilfe von Verbindungsmitteln (13) miteinander verbunden sind.

8. Wasserbadverdampfer nach Anspruch 6 oder 7, ferner umfassend mit dem Rohrbündel (22) in Fluidverbindung stehende Produktstutzen (17, 18), die an dem Mantelunterteil (5) vorgesehen sind.

9. Wasserbadverdampfer nach Anspruch 8, wobei der zweite Wasserstutzen (16) und die Produktstutzen (17, 18) an dem Boden (11) des Mantels (4) vorgesehen sind.

10. Wasserbadverdampfer nach einem der Ansprüche 6 - 9, wobei der erste Wasserstutzen (15) an einer Seitenwandung (10) des Mantelunterteils (5) vorgesehen ist.

11. Wasserbadverdampfer nach einem der Ansprüche 6 - 10, ferner umfassend ein Druckaufbaurohrbündel (27), das in dem Spalt (26) angeordnet ist.

12. Wasserbadverdampfer nach Anspruch 11, ferner umfassend mit dem Druckaufbaurohrbündel (27) in Fluidverbindung stehende Produktstutzen (31, 32), die an dem Mantelunterteil (5) vorgesehen sind.

13. Wasserbadverdampfer nach einem der Ansprüche 1 - 12, wobei das Rohrbündel (22) auf das Kernrohr (19) aufgewickelt ist.

14. Verfahrenstechnische Anlage (1) mit einem Wasserbadverdampfer (3) nach einem der Ansprüche 1 - 13.

15. Verfahrenstechnische Anlage nach Anspruch 14, ferner umfassend einen Gastank (2) für verflüssigte Gase, der in Fluidverbindung mit dem Rohrbündel (22) ist.
